# EUROPEAN PATENT SPECIFICATION

(11) **EP 3 223 105 B1**
(45) Date of publication and mention of the grant of the patent: **14.11.2018**
(21) Application number: 16162121.4
(22) Date of filing: 24.03.2016
(51) Int. Cl.: G05D 7/01, F16K 1/44

(54) **FLOW REGULATION VALVE**
STRÖMUNGSREGULIERUNGSVENTIL
SOUPAPE DE RÉGULATION DE FLUX

(43) Date of publication of application: 27.09.2017
(60) Divisional application: 18177248.4
(73) Proprietor: Honeywell Technologies Sarl, 1180 Rolle (CH)
(72) Inventor: Hynek, Marcel, 68201 Vyskov, CR (CZ)
(74) Representative: Sturm, Christoph

(56) References cited:
- EP-A1- 2 375 113
- WO-A2-2015/010685
- DE-B3- 10 256 035

## Description

The present patent application relates to a flow regulation valve for liquid conduction heating and cooling installations.

WO 2015/010685 A2 discloses a flow regulation valve according to the prior art. The flow regulation valve known from WO 2015/010685 A2 comprises a valve housing providing a valve inlet, a valve outlet and a connection port which is arranged between the valve inlet and the valve outlet, and further comprises a valve insert accommodated within the connection port of the valve housing. The valve insert has a valve insert housing. The valve insert further has a first valve body carried by a valve stem, wherein said first valve body provides a shut-off function when the valve is closed and a flow pre-setting function when the valve is opened. The valve insert further has a second valve body, wherein said second valve body provides a pressure-independent flow-regulation function when the valve is opened to keep the flow constant independent from the pressure being present upstream and/or downstream of the first valve body. The valve insert further has a diaphragm connected to the second valve body, wherein the pressure being present upstream of the first valve body is guided through a channel of the stem to a first side of the diaphragm, and wherein the pressure being present downstream of the first valve body is guided through at least one opening in the second valve body to a second side of the diaphragm. The valve insert of the flow regulation valve known from WO 2015/010685 A2 further provides valve seats for the first valve body and for the second valve body. This causes a valve insert having a large installation length requiring a connection port with an adapted length to receive such a valve insert. Further, almost the entire valve insert is flooded. This causes a further enlarged installation length of the valve insert because of the required sealing elements.

Other prior art is disclosed by DE 102 56 035 B3 and EP 2 375 113 A1.

Against this background, a novel flow regulation valve for liquid conduction heating and cooling installations according to claim 1 is provided.

According to the present invention, the first valve seat for the first valve body as well as the second valve seat for the second valve body are both provided by the valve housing. So, the valve insert does not provide these valve seats but the valve body accommodating the valve insert. This provides a shorter installation length of the valve insert. The valve insert does not require an enlarged connection port of the valve housing. The second valve seat for the second valve body is positioned proximate to the first valve seat for the first valve body. The valve housing has a conically shaped inner surface contour providing the second valve seat and proximate to the second valve seat the first valve seat. This provides a shorter installation length of the valve insert.

The valve insert has a flow-regulation spring acting on the second valve body, wherein a force provided by said flow-regulation spring and a force depending from the pressure being present downstream of the first valve body tend to move the second valve body in a first direction, whereas a force depending from the pressure being present upstream of the first valve body within the valve inlet tends to move the second valve body in a second, opposite direction.

According to a preferred embodiment of the invention, the valve insert has a ring element, wherein a first portion of the diaphragm is connected to the second valve body, whereas a second portion of the diaphragm is connected the ring element. The diaphragm and/or the ring element separates a flooded section of the valve insert housing from a dry section of the valve insert housing. This reduces the number of sealing elements needed and provides a further decreased or shortened installation length of the valve insert.

The first valve body and partially the stem as well as the second valve body and the flow-regulation spring are positioned within the flooded section of the valve insert housing.

According to a preferred embodiment of the invention, the valve insert has an opening spring, wherein a first end of the opening spring is supported against the ring element, and wherein a second end of the opening spring is supported against the stem. The valve insert further has a handle element received by the valve insert housing in such a way that said handle element comprises an outer thread acting together within an inner thread of the valve insert housing so that the handle element is rotatable relative to the valve insert housing. The stem carries a washer or a washer assembly or a rivet, wherein the handle element is supported against a first side of the washer or washer assembly or rivet, and wherein the second end of the opening spring is supported against a first side of the washer or washer assembly or rivet. This provides a shorter installation length of the valve insert and allows opening or closing of the valve with the handle element being an integral part of the valve insert.

The opening spring and the handle element are positioned with the dry section of the valve insert housing. This provides a shorter installation length of the valve insert.

Preferred developments of the invention are provided by the dependent claims and the description which follows. Exemplary embodiments are explained in more detail on the basis of the drawing, in which:
- Figure 1: shows a cross section through a flow regulation valve when the same is closed;
- Figure 2: shows a cross section through the flow regulation valve when the same is opened;
- Figure 3: shows a valve insert of the flow regulation valve;

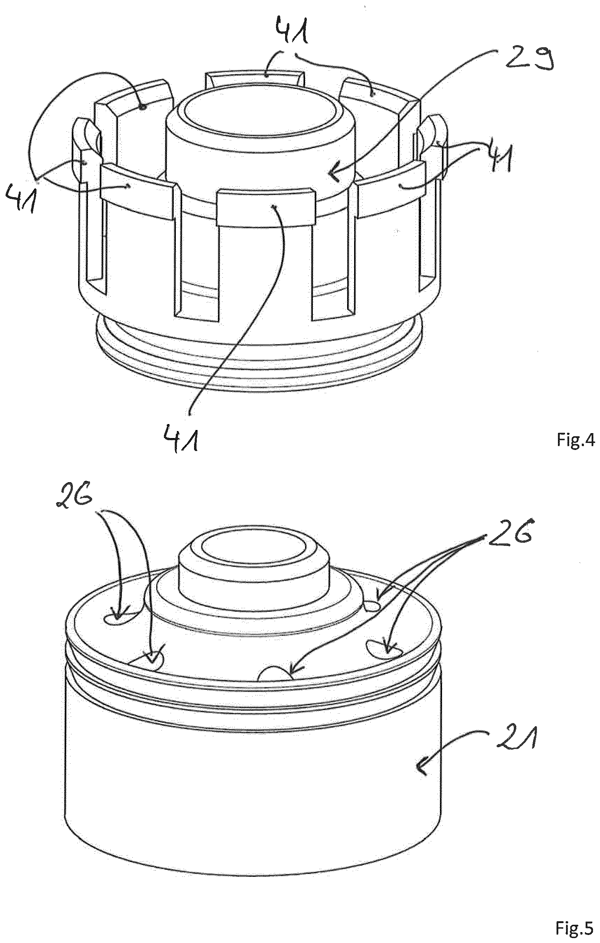

- Figure 4: shows a perspective view of a detail of the valve insert, namely of a ring element of the valve insert;
- Figure 5: shows a perspective view of a detail of the valve insert, namely of a second valve body of the valve insert; and
- Figure 6: shows a cross section through another flow regulation valve when the same is opened.

The present application relates to a flow regulation valve 10 for liquid conduction heating and cooling installations. The flow regulation valve 10 comprises a valve housing 11 providing a valve inlet 12, a valve outlet 13 and a connection port 14 which is arranged between the valve inlet 12 and the valve outlet 13.

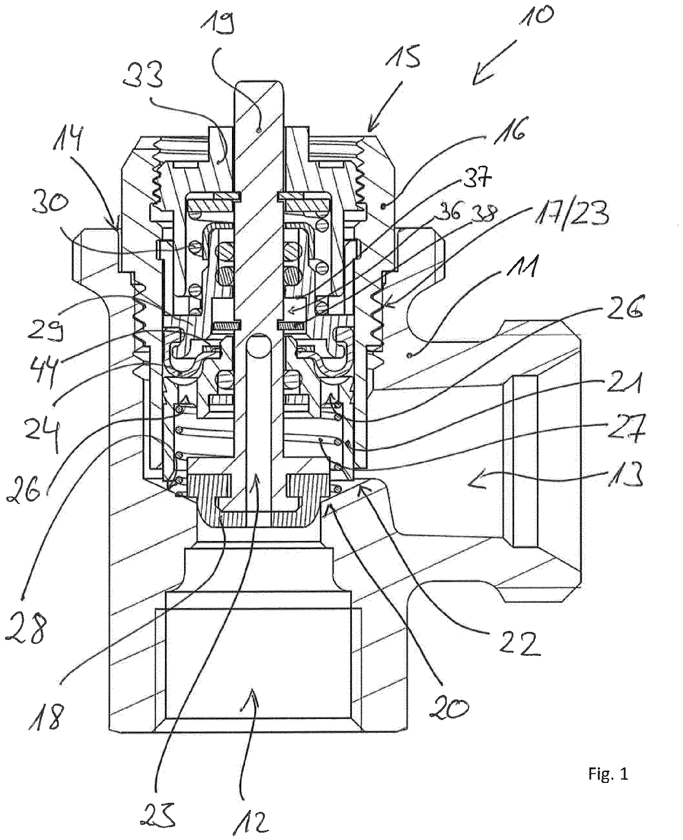

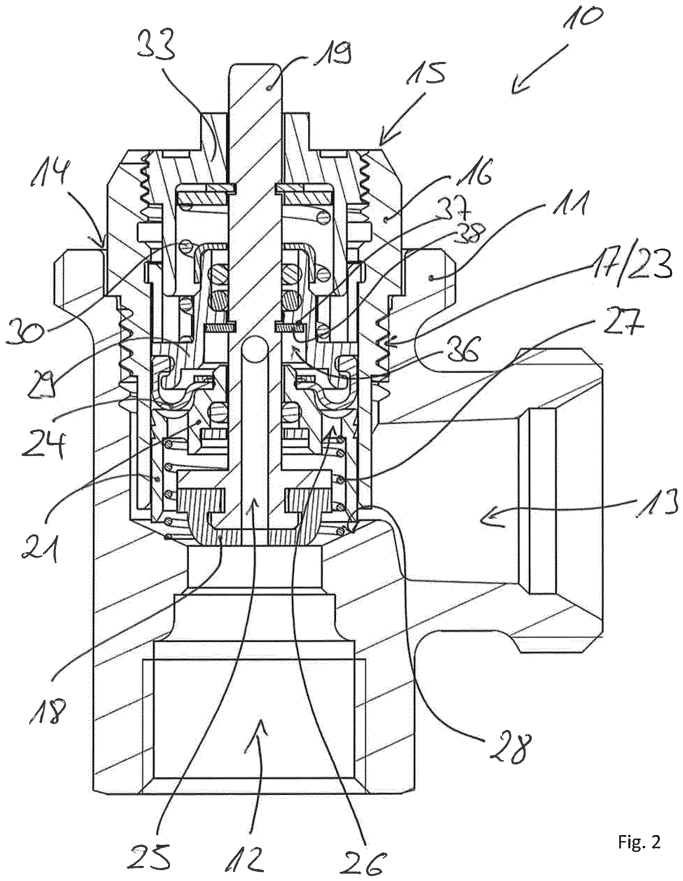

The flow regulation valve 10 further comprises a valve insert 15 accommodated within the connection port 14 of the valve housing 11. As can be seen in Figures 1 and 2, the valve insert 15 has a valve insert housing 16 with an outer thread 17 acting together with an inner thread 23 of the connection port 14 when the valve insert 15 is accommodated within the connection port 14 of the valve housing 11.

The valve insert 15 further has a first valve body 18 carried by a valve stem 19. Said first valve body 18 provides a shut-off function when the valve 10 is closed and a flow pre-setting function when the valve is 10 opened.

The first valve body 18 acts together with a first valve seat 20 provided by the valve housing 11. So, said first valve seat 20 is provided by the valve housing 11 and not by the valve insert 15. When the valve 10 is closed, the said first valve body 18 is pressed against the first valve seat 20 thereby providing the shut-off function. When the valve 10 is opened, the said first valve body 18 is lifted up from the first valve seat 20 thereby providing the flow pre-setting function. When the first valve body 18 is moved to a maximum distance relative to the first valve seat 20, a maximum flow is pre-set.

For reducing the pre-set flow, the first valve body 18 is moved or pushed closer towards the first valve seat 20. The more or the close the first valve body 18 is moved or pushed closer towards the first valve seat 20, the lower the pre-set flow is. The first valve body 18 is a plunger-type valve body made from rubber or a rubber-like material. The first valve body 18 can also be made from a PTFE material or PTFE-like material.

The valve insert 15 further has a second valve body 21, wherein said second valve body 21 provides a pressure-independent flow-regulation function when the valve 10 is opened to keep the fluid flow constant independent from the pressure being present upstream of the first valve body 18 and being present downstream of the first valve body 18.

The second valve body 21 acts together with a second valve seat 22 provided by the valve housing 10. So, also said second valve seat 22 is provided by the valve housing 11 and not by the valve insert 15. When the valve 10 is opened, said second valve body 21 moves up and down depending from the pressure difference between the pressure being present upstream of the first valve body 18 and the pressure being present downstream of the first valve body 18 for providing the pressure-independent flow-regulation function.

The second valve body 21 has a pot-like or bell-like shape with an inner space for receiving at least partially the first valve body 18. Sections of the second valve body 21 acting together with a second valve seat 22 are positioned concentrically around the first valve body 18. A lower section of the valve insert housing 16 is positioned concentrically around the second valve body 21 and guides the movement of the second valve body 21. The second valve body 21 guides the valve stem 19.

The valve insert 15 further has a diaphragm 24 connected to the second valve body 21. This connection of the diaphragm 24 connected to the second valve body 21 is preferably provided by a washer 44.

The pressure being present upstream of the first valve body 18 within the valve inlet 12 is guided through a channel 25 extending through the stem 19 and the first valve body 18 to a first side of the diaphragm 24, and wherein the pressure being present downstream of the first valve body 18 is guided through at least one opening 26 in the second valve body 21 to a second side of the diaphragm 24.

The valve insert 15 has a flow-regulation spring 27 acting on the second valve body 21, wherein a force provided by said flow-regulation spring 27 and a force depending from the pressure being present downstream of the first valve body 18 tend to move the second valve body 21 in a first direction, namely upwards, whereas a force depending from the pressure being present upstream of the first valve body 18 within the valve inlet 12 tends to move the second valve body 21 in a second, opposite direction, namely downwards.

The flow-regulation spring 27 is at least partially positioned within the inner space of the pot-like or bell-like second valve body 21. The flow-regulation spring 27 is positioned concentrically around the first valve body 18.

Sections of the second valve body 21 acting together with the second valve seat 22 are positioned concentrically around the flow-regulation spring 27 and around the first valve body18.

A first end of the flow-regulation spring 27 is supported against the second valve body 21, and a second end of the flow-regulation spring 27 is supported against an inner contour of the valve housing 11.

As mentioned above, the first valve seat 20 for the first valve body 18 and the second valve seat 22 for the second valve body 21 are both provided by the valve housing 11.

The second valve seat 22 for the second valve body 21 is positioned proximate to the first valve seat 21 for the first valve body 18, preferably concentrically around the first valve seat 20. The valve housing 11 has a conically shaped inner surface contour 28 providing the second valve seat 22 and proximate to the second valve seat 22 the first valve seat 20. The second end of the flow-regulation spring 27 is supported against said inner surface contour 28 of the valve housing 11, in a region between the first valve seat 20 and the second valve seat 22.

The valve insert 15 has a ring element 29, wherein a first portion of the diaphragm 14 is connected to the second valve body 21, whereas a second portion of the diaphragm 14 is connected the ring element 29. An outer section of the diaphragm 14 is fixed in a corresponding recess 45 of the ring element 29. The ring element 29 as well as the second valve body 21 guides the valve stem 19.

The ring element 29 has a radially inner recess 36. Said recess 36 provides a stop 37 for the movement of the valve stem 19 in the opening direction of the same. Said stop 27 acts together with a washer 38 carried by the valve stem 19. Said washer 38 is fixed in a groove 39 of the valve stem. When the valve is closed (see Figure 1), said washer 38 is not in contact with the stop 37. When the valve 10 is fully opened (see Figure 2) pre-setting the maximum flow through the same, said washer 38 is in contact with the stop 37.

The valve insert 15 further has an opening spring 30, wherein a first end of the opening spring 30 is supported against the ring element 29, and wherein a second end of the opening spring 30 is supported against the stem 19. The main function of said opening spring 30 is to push the first valve body 18 into the opening direction of the same.

The stem 19 carries at least one additional washer, in the shown embodiment two additional washers 31, 32. The first additional washer 32 is fixed in a groove 40 of the valve stem 19 and the second additional washer 31 is fixed at the first additional washer 32. The second end of the opening spring 30 is supported against the second additional washer 31. It is possible to integrate said two washers 31, 32 within a single washer.

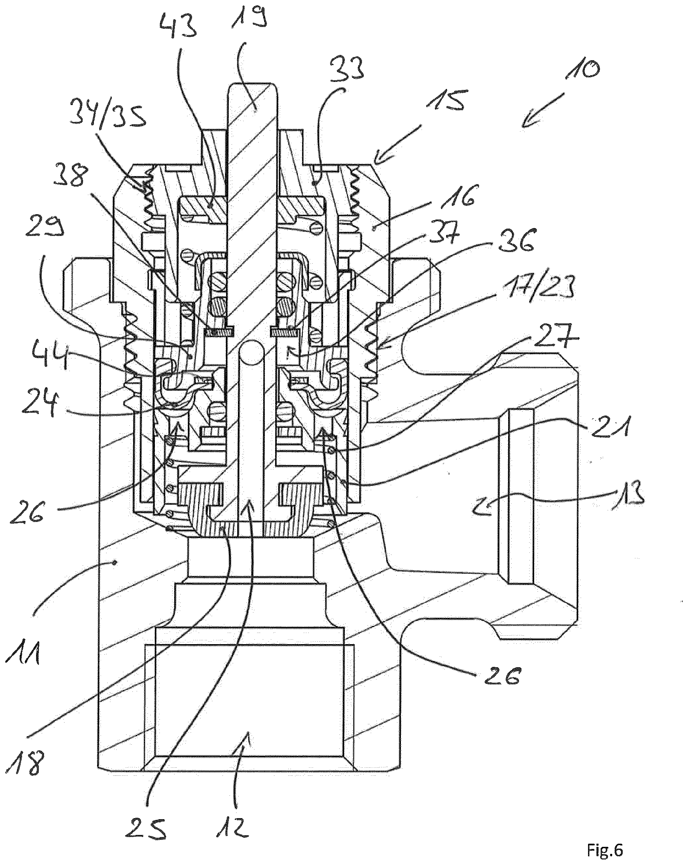

Figure 6 shows an embodiment in which the stem 19 does not carry such additional washers but a rivet 43. The rivet 43 may be attached to stem 19 by crimp connection. In Figure 6 the first end of the opening spring 30 is supported against the ring element 29, and the second end of the opening spring 30 is supported against the rivet 29. All other details of the valve 10 shown in Figure 6 correspond to the valve 10 shown in Figures 1 and 2. For that, identical reference signs are used for identical elements.

The valve insert 15 further has a handle element 33 received by the valve insert housing 16 in such a way that said handle element 33 comprises an outer thread 34 acting together within an inner thread 35 of the valve insert housing 16 so that the handle element 33 is rotatable relative to the valve insert housing 16. The handle element 33 guides a section of the stem 19.

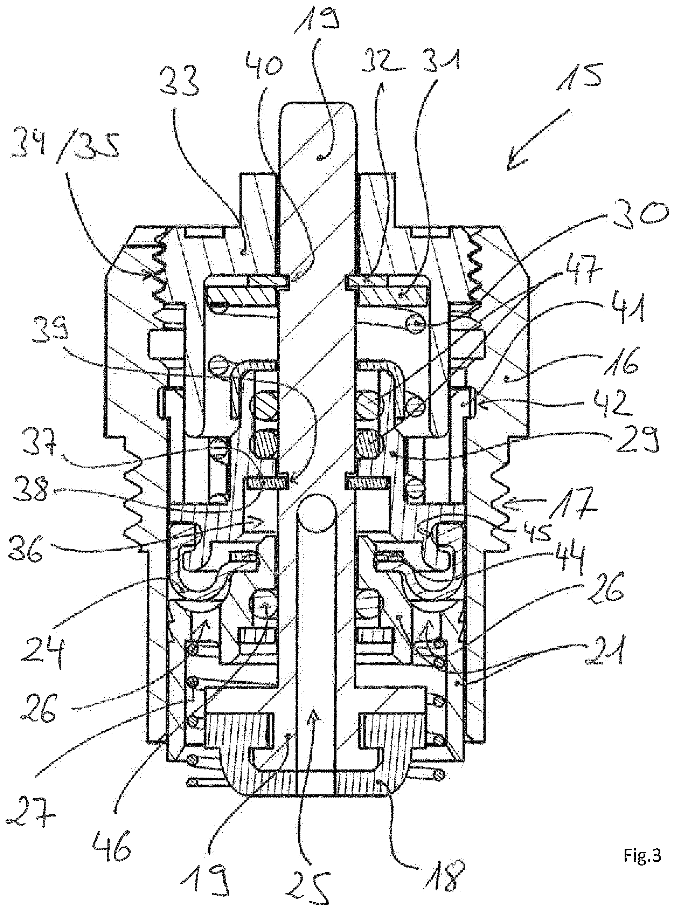

The handle element 33 is supported against the washer 32 (Figures 1-3) or rivet 43 (Figure 6). Assuming that both washers 31, 32 provide a washer assembly, the handle element 33 is supported against a first side of the washer assembly or rivet 43, and wherein the second end of the opening spring 30 is supported against a second side of the washer assembly or rivet 43.

By rotating the handle element 33, the stem 19 and thereby the first valve body ban be moved linear in the axial direction of the valve stem 19. The rotation of the handle element 33 causes - depending of the rotation direction - a compression or decompression of the opening spring 30.

The position of the ring element 29 is fixed by protrusions 41 of the ring element 29 providing a snap-fit connection within a recess 42 of the valve insert housing 16. Said protrusions 41 are an integral part of the ring element 29.

The protrusions 41 are positioned concentrically around a section of the handle element 33. Said section of the handle element 33 provides a collar which secures the snap-fit fixation of the ring element 29.

The diaphragm 24 and the ring element 33 separate a flooded section of the valve insert housing 16 from a dry section of the valve insert housing 16. The first valve body 18 and partially the stem 19 as well as the second valve body 21 and the flow-regulation spring 27 are positioned within the flooded section of the valve insert housing 16. The opening spring 30, the handle element 33 and partially the stem 19 are positioned with the dry section of the valve insert housing 16.

As mentioned above, the diaphragm 24 and the ring element 33 separate a flooded section of the valve insert housing 16 from a dry section of the valve insert housing 16. Only a few other additional sealing elements are required within the valve insert 5, namely at least one sealing element 46 between the valve stem 19 and the second valve body 21 and at least one further sealing element 47 between the valve stem 19 and the ring element 29.

As discussed above, the valve 10 provided three basic functions:
First, the shut-off function. For shutting off the valve 10 the first valve body 18 is pressed against the first valve seat 20. A force is transferred through the stem 19 to first valve body 18 of the valve insert 15 that closes against the first valve seat 20 provided by the valve housing 11. This force can be applied by the handle element 33 or by an actuator (not shown) acting on the valve stem 19.
Second, the flow pre-setting function. The flow pre-setting is provided by rotating the handle element 33 thereby compressing or decompressing the opening spring 30. This causes a linear movement of the valve stem 19 and of the first valve body 18 relative to the first valve seat 20.

After pre-setting is completed, the position of the first valve body 18 relative to the first valve seat 20 remains unchanged.

Third, the pressure-independent flow-regulation function. This pressure-independent flow-regulation function is provided by the diaphragm 24, by the second valve body 21 acting together with the second valve seat 22, and by flow regulation spring 27. The pressure being present upstream of the first valve body 18 is guided through to a first side of the diaphragm 24, and wherein the pressure being present downstream of the first valve body 18 is guided to a second side of the diaphragm 24.

The handle element 33 preferably carries the scale. The same allows flow pre-setting. By screwing or rotating the handle element 33 the same pushes the valve stem 19 up or down and consequently defines the flow pre-setting. The handle element 33 guides the valve stem 19.

The valve insert housing 16 provides an outer shell of the valve insert 16. The same provides a connection with valve body 11. The valve insert housing 16 guides second valve body 21 and provides the snap-fit fixation for the ring element 29. The handle element 33 secures the snap-fit fixation of the ring element 29 by its extended lower collar section.

The ring element 29 carries a shut-off subassembly comprising the second valve body 21 and the flow regulation spring 27 and further guides valve stem 19. The ring element 29 separates the flooded and dry sections of the valve insert 15. The ring element 29 holds the diaphragm 24 and provides the end stop 37 for the movement of the valve stem 19.

The diaphragm 24 compares forces from the pressure upstream of the first valve body 18, from the pressure downstream of the first valve body 18 and from the flow regulation spring 27 and commands the second valve body 21.

The diaphragm 24 is held by ring element 29 and by second valve body 21. On its outer diameter the diaphragm 24 seals the flooded and dry sections of the valve insert 15 between the ring element 29 and valve insert body 16. It is also possible to use an additional sealing element to seal the gap between the ring element 29 and valve insert body 16. The second valve body 21 throttles the flow and keep the flow constant.

The valve insert housing 16 may comprise an end stop to avoid complete unscrewing of the handle element 33 out of the valve insert housing 16.

### List of reference signs

- 10: flow regulation valve
- 11: valve housing
- 12: valve inlet
- 13: valve outlet
- 14: connection port
- 15: valve insert
- 16: valve insert housing
- 17: outer thread
- 18: first valve body
- 19: valve stem
- 20: first valve seat
- 21: second valve body
- 22: second valve seat
- 23: inner thread
- 24: diaphragm
- 25: channel
- 26: opening
- 27: flow-regulation spring
- 28: inner surface contour
- 29: ring element
- 30: opening spring
- 31: washer
- 32: washer
- 33: handle element
- 34: outer thread
- 35: inner thread
- 36: recess
- 37: stop
- 38: washer
- 39: groove
- 40: groove
- 41: nose
- 42: groove
- 43: rivet
- 44: washer
- 45: recess
- 46: sealing element
- 47: sealing element

## Claims

1. Flow regulation valve (10) for liquid conduction heating and cooling installations, comprising
a valve housing (11) providing a valve inlet (12), a valve outlet (13) and a connection port (14) which is arranged between the valve inlet (12) and the valve outlet (13);
a valve insert (15) accommodated within the connection port (14) of the valve housing, the valve insert (15) having
a valve insert housing (16);
a first valve body (18) carried by a valve stem (19), wherein said first valve body (18) provides a shut-off function when the valve (10) is closed and a flow pre-setting function when the valve (10) is opened;
a second valve body (21), wherein said second valve body (21) provides a pressure-independent flow-regulation function when the valve (10) is opened to keep the flow constant independent from the pressure being present upstream of the first valve body (18) and/or downstream of the first valve body (18);
a diaphragm (24) connected to the second valve body (21), wherein the pressure being present upstream of the first valve body (18) is guided through a channel (25) of the valve stem (19) to a first side of the diaphragm (24), and wherein the pressure being present downstream of the first valve body (18) is guided through at least one opening (26) in the second valve body (21) to a second side of the diaphragm (24);
**characterized in that**
a first valve seat (20) for the first valve body (18) and a second valve seat (22) for the second valve body (21) are both provided by the valve housing (11);
the valve housing (11) has a conically shaped inner surface contour (28) providing the second valve seat (22), wherein the first valve seat (20) is proximate to the second valve seat (22);
the valve insert (15) has a flow-regulation spring (27) acting on the second valve body (21), wherein a second end of the flow-regulation spring (27) is supported against the inner surface contour (28) of the valve housing (11) that provides the second valve seat (22) and the first valve seat (20).

2. Flow regulation valve as claimed in claim 1, **characterized in that** the second valve seat (22) for the second valve body (21) is positioned proximate to the first valve seat (20) for the first valve body (18).

3. Flow regulation valve as claimed in claim 1 or 2, **characterized in that** a force provided by said flow-regulation spring (27) and a force depending from the pressure being present downstream of the first valve body (18) tend to move the second valve body (21) in a first direction, whereas a force depending from the pressure being present upstream of the first valve body (18) tends to move the second valve body (21) in a second, opposite direction.

4. Flow regulation valve as claimed in claim 3, **characterized in that** a first end of the flow-regulation spring (27) is supported against the second valve body (21), and that the second end of the flow-regulation spring (27) is supported against the inner surface contour (28) of the valve housing.

5. Flow regulation valve as claimed in one of claims 1 to 4, **characterized in that** the valve insert (15) has a ring element (29), wherein a first portion of the diaphragm is connected to the second valve body (21) and a second portion of the diaphragm is connected to the ring element (29).

6. Flow regulation valve as claimed in claim 5, **characterized in that** the valve insert (15) has an opening spring (30), wherein a first end of the opening spring (30) is supported against the ring element (29), and wherein a second end of the opening spring (30) is supported against the valve stem (19).

7. Flow regulation valve as claimed in one of claims 1 to 6, **characterized in that** the valve insert (15) has a handle element (33) received by the valve insert housing (16) in such a way that said handle element (33) comprises an outer thread (34) acting together within an inner thread (35) of the valve insert housing (16) so that the handle element (33) is rotatable relative to the valve insert housing (16).

8. Flow regulation valve as claimed in claim 7, **characterized in that** the handle element (33) guides the valve stem (19).

9. Flow regulation valve as claimed in claim 6 and claim 7 or in claim 6 and claim 8, **characterized in that** the valve stem (19) carries a washer or a washer assembly (31, 32) or a rivet (43), wherein the handle element (33) is supported against a first side of the washer or the washer assembly (31, 32) or the rivet (43), and wherein the second end of the opening spring (30) is supported against a second side of the washer or the washer assembly (31, 32) or the rivet (43).

10. Flow regulation valve as claimed in one of claims 5 to 9, **characterized in that** the diaphragm (24) and/or the ring element (29) separates a flooded section of the valve insert housing (16) from a dry section of the valve insert housing (16).

11. Flow regulation valve as claimed in claim 10, **characterized in that** the opening spring (30) and the handle element (33) are positioned within the dry section of the valve insert housing (16).

12. Flow regulation valve as claimed in claim 10 or 11, **characterized in that** the first valve body (18) and partially the valve stem (19) as well as the second valve body (21) and the flow-regulation spring (27) are positioned within the flooded section of the valve insert housing (16).

## Patentansprüche

1. Durchflussregelventil (10) für flüssigkeitsleitende Heiz- und Kühlanlagen, aufweisend
ein Ventilgehäuse (11), welches einen Ventileinlass (12), einen Ventilauslass (13) und eine Anschlussöffnung (14) bereitstellt, welche zwischen dem Ventileinlass (12) und dem Ventilauslass (13) angeordnet ist;
einen Ventileinsatz (15), welcher innerhalb der Anschlussöffnung (14) des Ventilgehäuses untergebracht ist, wobei der Ventileinsatz (15) aufweist
ein Ventileinsatzgehäuse (16);
einen ersten Ventilkörper (18), welcher von einem Ventilschaft (19) getragen ist, wobei der erste Ventilkörper (18) eine Absperrfunktion, wenn das Ventil (10) geschlossen ist, und eine Durchflusseinstellfunktion bereitstellt, wenn das Ventil (10) geöffnet ist;
einen zweiten Ventilkörper (21), wobei der zweite Ventilkörper (21) eine druckunabhängige Durchflussregelfunktion bereitstellt, wenn das Ventil (10) geöffnet ist, um den Durchfluss unabhängig von dem stromaufwärts von dem ersten Ventilkörper (18) und/oder stromabwärts von dem ersten Ventilkörper (18) vorhandenen Druck konstant zu halten;
eine Membran (24), welche mit dem zweiten Ventilkörper (21) verbunden ist, wobei der stromaufwärts von dem ersten Ventilkörper (18) vorhandene Druck durch einen Kanal (25) des Ventilschafts (19) auf eine erste Seite der Membran (24) geleitet wird, und wobei der stromabwärts von dem ersten Ventilkörper (18) vorhandene Druck durch mindestens eine Öffnung (26) in dem zweiten Ventilkörper (21) auf eine zweite Seite der Membran (24) geleitet wird;
**dadurch gekennzeichnet, dass**
ein erster Ventilsitz (20) für den ersten Ventilkörper (18) und ein zweiter Ventilsitz (22) für den zweiten Ventilkörper (21) jeweils durch das Ventilgehäuse (11) bereitgestellt sind;
das Ventilgehäuse (11) eine konisch geformte innere Oberflächenkontur (28) aufweist, welche den zweiten Ventilsitz (22) bereitstellt, wobei der erste Ventilsitz (20) benachbart zu dem zweiten Ventilsitz (22) ist;
der Ventileinsatz (15) eine Durchflussregelfeder (27) aufweist, welche auf den zweiten Ventilkörper (21) wirkt, wobei ein zweites Ende der Durchflussregelfeder (27) an der inneren Oberflächenkontur (28) des Ventilgehäuses (11) gehalten ist, welche den zweiten Ventilsitz (22) und den ersten Ventilsitz (20) bereitstellt.

2. Durchflussregelventil nach Anspruch 1, **dadurch gekennzeichnet, dass** der zweite Ventilsitz (22) für den zweiten Ventilkörper (21) benachbart zu dem ersten Ventilsitz (20) für den ersten Ventilkörper (18) positioniert ist.

3. Durchflussregelventil nach Anspruch 1 oder 2, **dadurch gekennzeichnet, dass** eine von der Durchflussregelfeder (27) bereitgestellt Kraft und eine Kraft, welche von dem stromabwärts von dem ersten Ventilkörper (18) vorhandenen Druck abhängig ist, dazu neigen, den zweiten Ventilkörper (21) in eine erste Richtung zu bewegen, wohingegen eine Kraft, welche von der stromaufwärts von dem ersten Ventilkörper (18) vorhandenen Druck abhängig ist, dazu neigt, den zweiten Ventilkörper (21) in einer zweiten, entgegengesetzte Richtung zu bewegen.

4. Durchflussregelventil nach Anspruch 3, **dadurch gekennzeichnet, dass** ein erstes Ende der Durchflussregelfeder (27) an dem zweiten Ventilkörper (21) gehalten ist, und dass das zweite Ende der Durchflussregelfeder (27) an der inneren Oberflächenkontur (28) des Ventilgehäuses gehalten ist.

5. Durchflussregelventil nach einem der Ansprüche 1 bis 4, **dadurch gekennzeichnet, dass** der Ventileinsatz (15) ein Ringelement (29) aufweist, wobei der erste Abschnitt der Membran mit dem zweiten Ventilkörper (21) verbunden ist und ein zweiter Abschnitt der Membran mit dem Ringelement (29) verbunden ist.

6. Durchflussregelventil nach Anspruch 5, **dadurch gekennzeichnet, dass** der Ventileinsatz (15) eine Öffnungsfeder (30) aufweist, wobei ein erstes Ende der Öffnungsfeder (30) an dem Ringelement (29) gehalten ist, und wobei ein zweites Ende der Öffnungsfeder (30) an dem Ventilschaft (19) gehalten ist.

7. Durchflussregelventil nach einem der Ansprüche 1 bis 6, **dadurch gekennzeichnet, dass** der Ventileinsatz (15) ein Griffelement (33) aufweist, welches von dem Ventileinsatzgehäuse (16) derartig aufgenommen ist, dass das Griffelement (33) ein Außengewinde (34) aufweist, welches innerhalb eines Innengewindes (35) des Ventileinsatzgehäuses (16) zusammen wirkt, so dass das Griffelement (33) in Bezug auf das Ventileinsatzgehäuse (16) drehbar ist.

8. Durchflussregelventil nach Anspruch 7, **dadurch gekennzeichnet, dass** das Griffelement (33) den Ventilschaft (19) führt.

9. Durchflussregelventil nach Anspruch 6 und Anspruch 7 oder nach Anspruch 6 und Anspruch 8, **dadurch gekennzeichnet, dass** der Ventilschaft (19) eine Unterlegscheibe oder eine Unterlegscheibenanordnung (31, 32) oder einen Niet (43) trägt, wobei das Griffelement (33) an einer ersten Seite der Unterlegscheibe oder der Unterlegscheibenanordnung (31, 32) oder dem Niet (43) gehalten ist, und wobei das zweite Ende der Öffnungsfeder (30) an einer zweiten Seite der Unterlegscheibe oder der Unterlegscheibenanordnung (31, 32) oder dem Niet (43) gehalten ist.

10. Durchflussregelventil nach einem der Ansprüche 5 bis 9, **dadurch gekennzeichnet, dass** die Membran (24) und/oder das Ringelement (29) einen gefluteten Abschnitt des Ventileinsatzgehäuses (16) von einem trockenen Abschnitt des Ventileinsatzgehäuses (16) trennt.

11. Durchflussregelventil nach Anspruch 10, **dadurch gekennzeichnet, dass** die Membran (30) und das Griffelement (33) innerhalb des trockenen Abschnitts des Ventileinsatzgehäuses (16) positioniert sind.

12. Durchflussregelventil nach Anspruch 10 oder 11, **dadurch gekennzeichnet, dass** der erste Ventilkörper (18) und teilweise der Ventilschaft (19) sowie der zweite Ventilkörper (21) und die Durchflussregelfeder (27) innerhalb des gefluteten Abschnitts des Ventileinsatzgehäuses (16) positioniert sind.

## Revendications

1. Soupape de régulation de flux (10) destinée à des installations de chauffage et de refroidissement à conduction de liquide, comprenant
un boîtier de soupape (11) fournissant une entrée de soupape (12), une sortie de soupape (13) et un orifice de liaison (14) qui est disposé entre l'entrée de soupape (12) et la sortie de soupape (13) ;
un insert de soupape (15) logé à l'intérieur de l'orifice de liaison (14) du boîtier de soupape, l'insert de soupape (15) ayant
un boîtier d'insert de soupape (16) ;
un premier corps de soupape (18) porté par une tige de soupape (19), ledit premier corps de soupape (18) assurant une fonction d'arrêt lorsque la soupape (10) est fermée et une fonction de préréglage de flux lorsque la soupape (10) est ouverte ;
un second corps de soupape (21), ledit second corps de soupape (21) assurant une fonction de régulation de flux indépendante de la pression lorsque la soupape (10) est ouverte pour maintenir le flux constant indépendamment de la pression présente en amont du premier corps de soupape (18) et/ou en aval du premier corps de soupape (18) ;
une membrane (24) reliée au second corps de soupape (21), la pression présente en amont du premier corps de soupape (18) étant guidée à travers un canal (25) de la tige de soupape (19) vers un premier côté de la membrane (24), et la pression présente en aval du premier corps de soupape (18) étant guidée à travers au moins une ouverture (26) dans le second corps de soupape (21) vers un second côté de la membrane (24) ;
**caractérisée en ce que**
un premier siège de soupape (20) pour le premier corps de soupape (18) et un second siège de soupape (22) pour le second corps de soupape (21) sont tous deux fournis par le boîtier de soupape (11) ;
le boîtier de soupape (11) a un contour de surface interne de forme conique (28) fournissant le second siège de soupape (22), le premier siège de soupape (20) étant proche du second siège de soupape (22) ;
l'insert de soupape (15) a un ressort de régulation de flux (27) agissant sur le second corps de soupape (21), une seconde extrémité du ressort de régulation de flux (27) étant supportée contre le contour de surface interne (28) du boîtier de soupape (11) qui fournit le second siège de soupape (22) et le premier siège de soupape (20).

2. Soupape de régulation de flux selon la revendication 1, **caractérisée en ce que** le second siège de soupape (22) pour le second corps de soupape (21) est positionné à proximité du premier siège de soupape (20) pour le premier corps de soupape (18).

3. Soupape de régulation de flux selon la revendication 1 ou 2, **caractérisée en ce qu'une** force fournie par ledit ressort de régulation de flux (27) et une force dépendant de la pression présente en aval du premier corps de soupape (18) tendent à déplacer le second corps de soupape (21) dans une première direction, tandis qu'une force dépendant de la pression présente en amont du premier corps de soupape (18) tend à déplacer le second corps de soupape (21) dans une seconde direction opposée.

4. Soupape de régulation de flux selon la revendication 3, **caractérisée en ce qu**'une première extrémité du ressort de régulation de flux (27) est supportée contre le second corps de soupape (21), et en ce que la seconde extrémité du ressort de régulation de flux (27) est supportée contre le contour de surface interne (28) du boîtier de soupape.

5. Soupape de régulation de flux selon l'une des revendications 1 à 4, **caractérisée en ce que** l'insert de soupape (15) a un élément annulaire (29), une première partie de la membrane étant reliée au second corps de soupape (21) et une seconde partie de la membrane étant reliée à l'élément annulaire (29).

6. Soupape de régulation de flux selon la revendication 5, **caractérisée en ce que** l'insert de soupape (15) a un ressort d'ouverture (30), une première extrémité du ressort d'ouverture (30) étant supportée contre l'élément annulaire (29), et une seconde extrémité du ressort d'ouverture (30) étant supportée contre la tige de soupape (19).

7. Soupape de régulation de flux selon l'une des revendications 1 à 6, **caractérisée en ce que** l'insert de soupape (15) a un élément poignée (33) reçu par le boîtier d'insert de soupape (16) de sorte que ledit élément poignée (33) comprenne un filet externe (34) agissant conjointement à l'intérieur d'un filet interne (35) du boîtier d'insert de soupape (16) de sorte que l'élément poignée (33) puisse tourner par rapport au boîtier d'insert de soupape (16).

8. Soupape de régulation de flux selon la revendication 7, **caractérisée en ce que** l'élément poignée (33) guide la tige de soupape (19).

9. Soupape de régulation de flux selon les revendications 6 et 7 ou selon les revendications 6 et 8, **caractérisée en ce que** la tige de soupape (19) porte une rondelle ou un ensemble rondelle (31, 32) ou un rivet (43), l'élément poignée (33) étant supporté contre un premier côté de la rondelle ou de l'ensemble rondelle (31, 32) ou du rivet (43), et la seconde extrémité du ressort d'ouverture (30) étant supportée contre un second côté de la rondelle ou de l'ensemble rondelle (31, 32) ou du rivet (43).

10. Soupape de régulation de flux selon l'une des revendications 5 à 9, **caractérisée en ce que** la membrane (24) et/ou l'élément annulaire (29) sépare une section inondée du boîtier d'insert de soupape (16) d'une section sèche du boîtier d'insert de soupape (16) .

11. Soupape de régulation de flux selon la revendication 10, **caractérisée en ce que** le ressort d'ouverture (30) et l'élément poignée (33) sont positionnés à l'intérieur de la partie sèche du corps d'insert de soupape (16).

12. Soupape de régulation de flux selon la revendication 10 ou 11, **caractérisée en ce que** le premier corps de soupape (18) et partiellement la tige de soupape (19) ainsi que le second corps de soupape (21) et le ressort de régulation de flux (27) sont positionnés dans la section inondée du corps d'insert de soupape (16).
